# EUROPÄISCHE PATENTSCHRIFT

(11) **EP 1 574 273 B1**
(45) Veröffentlichungstag und Bekanntmachung des Hinweises auf die Patenterteilung: **14.03.2007**
(21) Anmeldenummer: 05001760.7
(22) Anmeldetag: 28.01.2005
(51) Int. Cl.: B23B 3/06, B23Q 39/02

(54) **Drehmaschine**
Lathe
Tour

(30) Priorität: 30.01.2004 DE 102004005498
(43) Veröffentlichungstag der Anmeldung: 14.09.2005
(73) Patentinhaber: Index-Werke GmbH & Co. KG Hahn & Tessky, 73730 Esslingen (DE)
(72) Erfinder: Hafla, Dietmar Franz, 73666 Baltmannsweiler (DE)
(74) Vertreter: Hoeger, Stellrecht & Partner Patentanwälte

(56) Entgegenhaltungen:
- EP-B- 0 374 259
- DE-A1- 4 316 166
- DE-A1- 19 900 294
- DE-C2- 10 237 191

## Beschreibung

Die Erfindung betrifft eine Drehmaschine umfassend ein sich über einer Grundfläche erhebendes Maschinengestell, einen relativ zum Maschinengestell durch ein Schlittensystem mindestens in einer ersten Bewegungsebene in Richtung zweier quer zueinander verlaufender Bewegungsachsen bewegbaren Werkstückträger mit mindestens einer eine Werkstückaufnahme aufweisenden Werkstückspindel, deren Spindelachse parallel zur ersten Bewegungsebene verläuft, sowie einen ersten und zweiten am Maschinengestell angeordneten Werkzeugträger zur Aufnahme von jeweils mindestens einem ersten bzw. einem zweiten Werkzeug, von denen mindestens eines relativ zum Maschinengestell bewegbar ist.

Derartige Drehmaschinen sind beispielsweise aus der DE 102 37 191 bekannt.

Bei einer derartigen Drehmaschine ergibt sich insbesondere bei hochpräzisen Bearbeitungen eine nicht gleichbleibend gute Bearbeitungsqualität.

Der Erfindung liegt daher die Aufgabe zugrunde, eine Drehmaschine der eingangs beschriebenen Art dahingehend zu verbessern, daß eine möglichst gleichbleibende Bearbeitungsqualität erreichbar ist.

Diese Aufgabe wird bei einer Drehmaschine der eingangs beschriebenen Art erfindungsgemäß dadurch gelöst, daß der erste Werkzeugträger relativ zum Maschinengestell nur in einer, in einer zur ersten Bewegungsebene parallelen zweiten Bewegungsebene liegenden ersten Werkzeugbewegungsrichtung bewegbar ist, daß der zweite Werkzeugträger nur in einer quer zur ersten verlaufenden und in der zweiten Bewegungsebene liegenden zweiten Werkzeugbewegungsrichtung bewegbar ist und daß eine Steuerung vorgesehen ist, welche zur Bearbeitung mit dem mindestens einem ersten Werkzeug des ersten Werkzeugträgers eine Relativbewegung zwischen dem ersten Werkzeug und dem Werkstückträger durch Bewegen des ersten Werkzeugs in der ersten Werkzeugbewegungsrichtung und Bewegen des Werkstückträgers in der zweiten Werkzeugbewegungsrichtung ausführt und welche zur Bearbeitung mit dem mindestens einen zweiten Werkzeug des zweiten Werkzeugträgers eine Relativbewegung zwischen dem zweiten Werkzeug und dem Werkstückträger durch Bewegen des zweiten Werkzeugs in der zweiten Werkzeugbewegungsrichtung und Bewegen des Werkstückträgers in der ersten Werkzeugbewegungsrichtung ausführt.

Der Vorteil der erfindungsgemäßen Lösung ist darin zu sehen, daß mit dieser die Möglichkeit besteht, eine optimale Bearbeitungsqualität zu erreichen, da jedes der Werkzeuge relativ zum Maschinengestell nur in einer Werkzeugbewegungsrichtung bewegbar geführt ist und somit die Möglichkeit besteht, eine sehr stabile Führung des Werkzeugs relativ zum Maschinengestell zu realisieren.

Außerdem ist das Werkstück relativ zum Maschinengestell sowohl bei der Bearbeitung mit dem ersten Werkzeug als auch bei der Bearbeitung mit dem zweiten Werkzeug durch dasselbe Schlittensystem geführt, so daß sich dessen Ungenauigkeiten bei der Bearbeitung mit dem ersten Werkzeug oder mit dem zweiten Werkzeug jeweils in gleicher Weise auswirken.

Insbesondere besteht bei der erfindungsgemäßen Lösung bei gleichzeitiger Bewegung des Werkstückträgers und des ersten und/oder zweiten Werkzeugträgers die Möglichkeit, mit dem ersten und dem zweiten Werkzeug gleichzeitig mindestens ein Werkstück zu Bearbeiten.

Besonders günstig ist es, wenn die Steuerung zur gleichzeitigen und unabhängig voneinander erfolgenden Bearbeitung mit dem mindestens einen ersten Werkzeug und dem mindestens einen zweiten Werkzeug die Bewegung des mindestens einen ersten Werkzeugs in der ersten Werkzeugbewegungsrichtung relativ zum Maschinengestell entsprechend dem bearbeitungsnotwendigen Abstand von einem Werkstückbezugspunkt und zusätzlich entsprechend der Bewegung des Werkstückbezugspunkts in der ersten Werkzeugbewegungsrichtung relativ zum Maschinengestell für die Bearbeitung mit dem zweiten Werkzeug ausführt und daß die Steuerung die Bewegung des mindestens einen zweiten Werkzeugs in der zweiten Werkzeugbewegungsrichtung relativ zum Maschinengestell entsprechend dem bearbeitungsnotwendigen Abstand von dem Werkstückbezugspunkt und zusätzlich entsprechend der Bewegung des Werkstückbezugspunkts in Richtung der zweiten Werkzeugbewegungsrichtung relativ zum Maschinengestell für die Bearbeitung mit dem ersten Werkzeug ausführt.

Der Vorteil dieser Lösung ist darin zu sehen, daß somit die Möglichkeit besteht, mit beiden Werkzeugen unabhängig voneinander und gleichzeitig eine Bearbeitung auszuführen und somit die Bearbeitungszeiten zu minimieren.

Um die Steuerung effizient betreiben zu können, ist vorzugsweise vorgesehen, daß die Steuerung so arbeitet, daß für diese die Bewegung des Werkstückbezugspunktes in der zweiten Werkzeugbewegungsrichtung zur Bearbeitung mit dem ersten Werkzeug eine Primärachse darstellt, nach welcher sich die Bewegung des zweiten Werkzeugs in der zweiten Werkzeugbewegungsrichtung richtet.

Ferner ist es vorteilhaft, wenn die Steuerung so arbeitet, daß für diese die Bewegung des Werkstückbezugspunkts in der ersten Werkzeugbewegungsrichtung zur Bearbeitung mit dem zweiten Werkzeug eine Primärachse darstellt, nach welcher sich die Bewegung des ersten Werkzeugs in der ersten Werkzeugbewegungsrichtung richtet.

Die erfindungsgemäße Lösung arbeitet somit mit einer ungewöhnlichen Steuerungskonzeption, bei welcher für die Bearbeitung mit jedem der Werkzeuge jeweils nur eine Achse eine Primärachse ist, während die andere Achse eine abhängige Achse ist, die sich auch nach der Primärachse für das andere Werkzeug richten muß.

Hinsichtlich der Ausrichtung der Werkzeugbewegungsachsen relativ zu den Werkstückbewegungsachsen wurden bislang keine näheren Angaben gemacht.

Solange die erste Bewegungsebene und die zweite Bewegungsebene parallel zueinander verlaufen, können die Werkstückbewegungsachsen relativ zu den Werkzeugbewegungsachsen beliebig orientiert sein, da die Bewegung in Richtung der Werkzeugbewegungsachsen dann durch Interpolation zwischen zwei Werkstückbewegungsachsen realisierbar ist.

Aus Gründen einer möglichst einfachen Steuerung ist es jedoch günstig, wenn die erste Werkzeugbewegungsachse parallel zur ersten Werkstückbewegungsachse verläuft.

Ferner ist es günstig, wenn die zweite Werkzeugbewegungsachse parallel zur zweiten Werkstückbewegungsachse verläuft.

Bei den bisher beschriebenen Ausführungsbeispielen wurde davon ausgegangen, daß der Werkstückträger mindestens eine Werkstückspindel aufweist.

Mit einer einzigen Werkstückspindel auf dem Werkzeugträger erfolgt eine gleichzeitige Bearbeitung mit dem ersten Werkzeug und dem zweiten Werkzeug dann stets so, daß diese an demselben Werkstück arbeiten.

Die erfindungsgemäße Lösung eignet sich auch für Drehmaschinen, bei welchen der Werkstückträger zwei Werkstückspindeln umfaßt.

Zwei Werkstückspindeln können in unterschiedlichster Art und Weise relativ zueinander ausgerichtet sein. Eine vorteilhafte Lösung sieht dabei vor, daß die Werkstückspindeln mit ihren Spindelachsen parallel zueinander ausgerichtet sind.

Ferner sind die Werkstückspindeln vorzugsweise ebenfalls so angeordnet, daß die Werkstückaufnahme auf der der Grundfläche zugewandten Seite vorgesehen ist.

Beim Vorsehen mehrerer Werkstückspindeln ist der erfindungsgemäße Vorteil auch bereits dann erreichbar, wenn das in einer ersten Werkstückspindel angeordnete erste Werkstück durch das mindestens eine erste Werkzeug bearbeitbar ist und das in einer zweiten Werkstückspindel angeordnete zweite Werkstück durch das mindestens eine zweite Werkzeug bearbeitbar ist.

Diese Lösung schließt jedoch nicht aus, daß eine Bearbeitung mit dem ersten und dem zweiten Werkzeug an dem ersten Werkstück oder an dem zweiten Werkstück möglich ist.

Hinsichtlich der Werkzeugträger wurden bislang ebenfalls keine näheren Angaben gemacht.

Beispielsweise könnten die Werkzeugträger als Linearwerkzeugträger ausgebildet sein.

Um möglichst viele Werkzeuge in Einsatz bringen zu können, hat es sich jedoch als besonders günstig erwiesen, wenn die Werkzeugträger als Werkzeugrevolver ausgebildet sind. Derartige Werkzeugrevolver können in unterschiedlichster Art und Weise ausgebildet sein.

So sieht eine bevorzugte Lösung vor, daß die Werkzeugrevolver als Sternrevolver ausgebildet sind.

Die Ausbildung der Werkzeugrevolver als Sternrevolver sieht vor, daß diese umfangsseitig mit Werkzeugen bestückbar sind.

Alternativ dazu sieht eine weitere Möglichkeit vor, daß die Werkzeugrevolver einander zugewandte Bestückungsseiten aufweisen und somit beispielsweise als Scheiben- oder Kronenrevolver ausgebildet sind.

Hinsichtlich der Verfahrwege der Werkzeugträger wurden bislang keine näheren Angaben gemacht.

Um mit den von den Werkzeugträgern gehaltenen Werkzeugen uneingeschränkt Bearbeitungen am gesamten Werkstück vornehmen zu können, ist vorteilhafterweise vorgesehen, daß der Verfahrweg in der parallel zur Spindelachse verlaufenden Werkzeugbewegungsrichtung größer ist als eine Ausdehnung des Werkstücks in dieser Richtung.

Ferner ist es ebenfalls günstig, wenn der Verfahrweg in der quer zur Spindelachse verlaufenden Werkzeugbewegungsrichtung größer ist als ein halber Durchmesser des Werkstücks.

Besonders günstig ist es, wenn sowohl der erste Werkzeugträger als auch der zweite Werkzeugträger in der ersten Werkzeugbewegungsrichtung bzw. der zweiten Werkzeugbewegungsrichtung mindestens über Abmessungen des Werkstücks in diesen Richtungen entsprechende Verfahrwege bewegbar sind.

Um insbesondere im Fall eines Werkstückträgers mit einer einzigen Werkstückspindel sowohl gleichzeitig Innenbearbeitungen als auch Außenbearbeitungen vornehmen zu können, ist vorgesehen, daß die ersten und zweiten Werkzeugträger so ausgebildet und mit Werkzeugen bestückbar sind, daß sie kollisionsfrei mindestens soweit aufeinanderzu bewegbar sind, daß das in Arbeitsstellung stehende erste und das in Arbeitsstellung stehende zweite Werkzeug einen einem halben Werkstückdurchmesser entsprechenden Abstand oder weniger aufweisen.

Im Zusammenhang mit Ausführungsformen einer erfindungsgemäßen Drehmaschine mit zwei Werkstückspindeln wurden keine näheren Angaben über die relative Anordnung der Arbeitsspindel zueinander gemacht.

Um in vorteilhafter Weise gleichzeitig mit ersten Werkzeugen eines der Werkstücke und mit zweiten Werkzeugen das andere der Werkstücke bearbeiten zu können, ohne daß Werkzeugkollisionen entstehen, ist vorzugsweise vorgesehen, daß ein Abstand der Spindelachsen der Werkstückspindeln ungefähr einem Abstand von ersten und zweiten Innenbearbeitungswerkzeugen bei kollisionsfreien nächstliegend angeordneten Werkzeugträgern entspricht.

Darüber hinaus läßt sich bei einer Ausführungsform einer erfindungsgemäßen Drehmaschine mit zwei Werkstückspindeln ein maximaler Fahrweg des quer zu den Spindelachsen verfahrbaren Werkzeugträgers dahingehend definieren, daß dieser mindestens ungefähr der Summe aus den maximalen Radien der Werkstücke zuzüglich der Länge der längsten, in Arbeitsstellung stehenden radial arbeitenden angetriebenen Werkzeuge entspricht. Damit besteht die Möglichkeit, mit radial arbeitenden Werkzeugen, beispielsweise Bohr- und Fräswerkzeugen, über den gesamten Radius der jeweiligen Werkstücke zu bearbeiten, beispielsweise von einer Umfangsseite der Werkstücke in diese hineinzubohren.

Vorzugsweise erfolgt ein derartiges radiales Bearbeiten der Werkstücke mit angetriebenen Werkzeugen von einander gegenüberliegenden Seiten des Werkstückträgers, das heißt, daß die Werkstücke jeweils auf den einander abgewandten Seiten mit den radial arbeitenden angetriebenen Werkzeugen bearbeitet werden.

Die erfindungsgemäße Drehmaschine ist mit ihren kinematischen Möglichkeiten besonders günstig dann ausgeführt, wenn die Werkstückaufnahme hängend auf einer der Grundfläche zugewandten Seite der Werkstückspindel angeordnet ist. In einem derartigen Fall ist mit dem Werkstückträger neben der Bearbeitung des mindestens einem Werkstücks auch die Handhabung des Werkstücks beim Aufnehmen und Ablegen desselben vorteilhaft realisierbar.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: eine Frontansicht eines ersten Ausführungsbeispiels einer erfindungsgemäßen Drehmaschine;
- Fig. 2: eine ausschnittsweise Darstellung der Frontansicht des ersten Ausführungsbeispiels bei gleichzeitiger Außenbearbeitung mit einem ersten und einem zweiten Werkzeug;
- Fig. 3: einen Ausschnitt aus der Frontansicht des ersten Ausführungsbeispiels bei gleichzeitiger Innenbearbeitung mit dem ersten Werkzeug und Außenbearbeitung mit dem zweiten Werkzeug;
- Fig. 4: eine Darstellung ähnlich Fig. 2 oder 3 bei einem zweiten Ausführungsbeispiel einer erfindungsgemäßen Drehmaschine mit zwei Werkstückspindeln bei gleichzeitiger Außenbearbeitung an den in beiden Werkstückspindeln gehaltenen Werkstücken,
- Fig. 5: eine Darstellung ähnlich Fig. 4 einer anderen Art der Außenbearbeitung der beiden Werkstücke beim zweiten Ausführungsbeispiel der erfindungsgemäßen Drehmaschine und

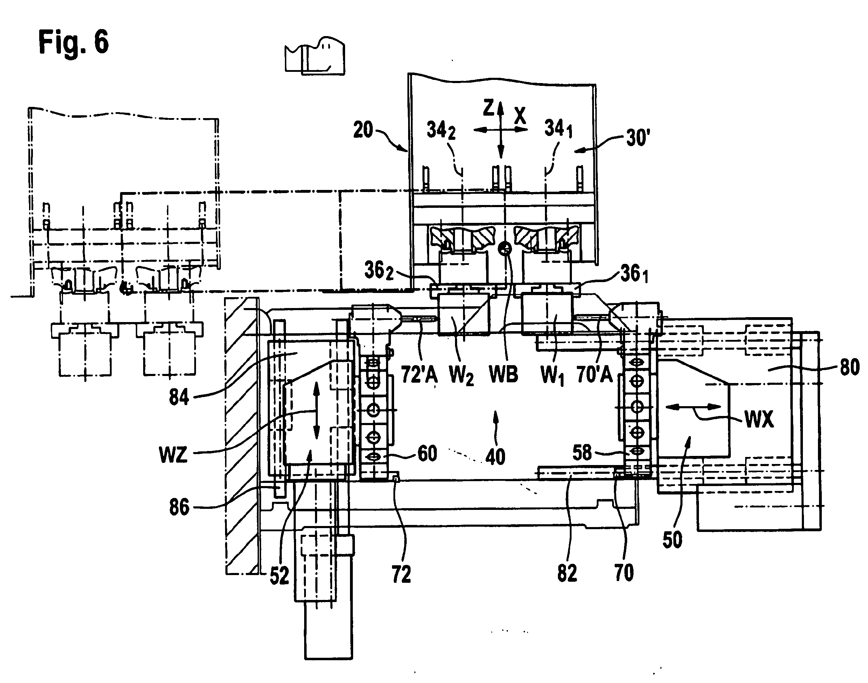

- Fig. 6: eine Darstellung ähnlich Fig. 2 eines dritten Ausführungsbeispiels einer erfindungsgemäßen Drehmaschine.

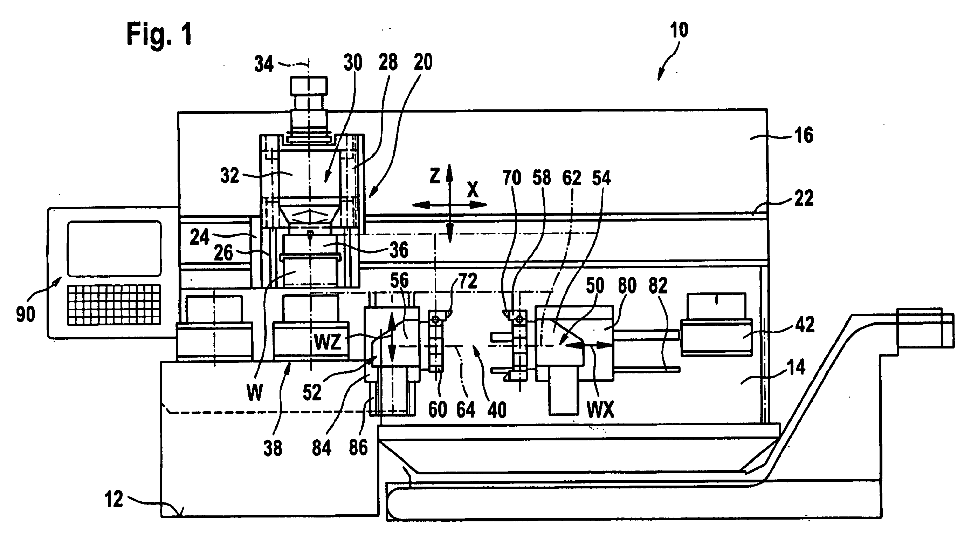

Ein in Fig. 1 dargestelltes erstes Ausführungsbeispiel einer erfindungsgemäßen Drehmaschine, ausgeführt in diesem Fall als Vertikaldrehmaschine, umfaßt ein Maschinengestell 10, welches sich über einer Grundfläche 12 erhebt und dabei ein auf der Grundfläche 12 abgestütztes Untergestell 14 sowie ein auf dem Untergestell 14 sitzendes Obergestell 16 umfaßt.

An dem Obergestell 16 ist ein als Ganzes mit 20 bezeichnetes Schlittensystem gehalten, welches die Möglichkeit schafft, einen auf dem Schlittensystem 20 angeordneten Werkstückträger 30 relativ zum Maschinengestell 10 in zwei senkrecht zueinander verlaufenden Achsrichtungen X und Z zu bewegen, welche eine erste Bewegungsebene X/Z aufspannen. Hierzu ist das Schlittensystem 20 insbesondere als Kreuzschlittensystem ausgebildet und umfaßt beispielsweise einen längs einer am Obergestell 16 parallel zur Achsrichtung X und beispielsweise im wesentlichen horizontal verlaufende Schlittenführung 22, auf welcher ein X-Schlitten 24 bewegbar und antreibbar geführt ist. Ferner sitzt auf dem X-Schlitten 24 eine Schlittenführung 26, an welcher ein Z-Schlitten 28 parallel zur Achsrichtung Z verschiebbar geführt ist, wobei der Z-Schlitten 28 seinerseits den Werkstückträger 30 trägt.

Das Schlittensystem 20 ist in diesem Fall als konventionelles Kreuzschlittensystem aufgebaut, es sind aber auch andere zweidimensionale Schlittensysteme denkbar.

Als Werkstückträger 30 ist bei dem ersten Ausführungsbeispiel eine Werkstückspindel 32 vorgesehen, welche eine um eine ungefähr vertikal verlaufende Spindelachse 34 drehbare Werkstückaufnahme 36 trägt. Dabei ist die Werkstückspindel 32 hängend angeordnet, das heißt, daß die Werkstückaufnahme 36 der Grundfläche 12 zugewandt angeordnet ist.

Mit dem Schlittensystem 20 ist die Werkstückspindel 32 vorzugsweise so bewegbar, daß diese mit der Werkstückaufnahme 36 über einer Werkstückzufuhreinrichtung 38 positionierbar ist, dann in einen Arbeitsraum 40 verfahrbar ist und vorzugsweise in X-Richtung weiter aus dem Arbeitsraum 40 heraus verfahrbar ist, daß die Werkstückaufnahme 36 über einer auf einer der Werkstückzufuhreinrichtung 38 gegenüberliegenden Seite des Arbeitsraums 40 angeordneten Werkstückabfuhreinrichtung 42 positionierbar ist.

Zur Realisierung eines derartigen Werkstückflusses erstreckt sich die parallel zur Achsrichtung X verlaufende Schlittenführung 22 am Obergestell 16 beiderseits über den Arbeitsraum 40 hinaus bis über die Werkstückzufuhreinrichtung 38 und die Werkstückabfuhreinrichtung 42.

Im Arbeitsraum 40 sind ferner ein erster Werkzeugträger 50 und ein zweiter Werkzeugträger 52 angeordnet, die beide vorzugsweise als Werkzeugrevolver ausgebildet sind und daher ein erstes Revolvergehäuse 54 bzw. ein zweites Revolvergehäuse 56 aufweisen, an welchen jeweils ein erster Revolverkopf 58 bzw. ein zweiter Revolverkopf 60 um die jeweilige erste Revolverachse 62 bzw. zweite Revolverachse 64 drehbar gelagert sind.

Dabei trägt der erste Revolverkopf 58 mehrere erste Werkzeuge 70 und der zweite Revolverkopf 60 trägt vorzugsweise mehrere zweite Werkzeuge 72 von denen jeweils eines in eine Arbeitsstellung bringbar ist, wobei die Arbeitsstellung so gewählt ist, daß eine Bearbeitung mit dem jeweiligen ersten Werkzeug 70A bzw. zweiten Werkzeug 72A an einem in der Werkstückaufnahme 36 aufzunehmenden Werkstück W möglich ist, ohne daß die übrigen ersten Werkzeuge 70 mit den übrigen zweiten Werkzeugen 72 oder mit dem Werkstück W oder umgekehrt kollidieren.

Der erste Werkzeugträger 50 ist vorzugsweise auf einem ersten Werkzeugschlitten 80 gelagert, welcher auf am Untergestell 14 angeordneten Längsführungen 82 in Richtung einer ersten Werkzeugbewegungsrichtung WX bewegbar ist, die vorzugsweise parallel zur Achsrichtung X des Schlittensystems 20 verläuft.

Dabei ist erfindungsgemäß die Bewegbarkeit des ersten Werkzeugträgers 50 relativ zum Maschinengestell 10 auf die erste Werkzeugbewegungsrichtung WX begrenzt, so daß durch die ausschließliche Bewegbarkeit des ersten Werkzeugschlittens 80 in Richtung der Längsführung 82 eine sehr stabile und präzise Führung des ersten Werkzeugträgers 50 relativ zum Maschinengestell 10, in diesem Fall zum Untergestell 14, realisierbar ist.

Der zweite Werkzeugträger 52 sitzt seinerseits auf einem zweiten Werkzeugschlitten 84, welcher an einer Längsführung 86 geführt ist, wobei der zweite Werkzeugschlitten 84 in einer zweiten Werkzeugbewegungsrichtung WZ bewegbar geführt ist, die senkrecht zur ersten Werkzeugbewegungsrichtung WX verläuft und vorzugsweise parallel zur Achsrichtung Z, in welcher der Werkstückträger 30 bewegbar ist.

Somit ist auch der zweite Werkzeugträger 52 ausschließlich in Richtung einer Linearachse relativ zum Untergestell 14, auf welcher die Längsführung 86 angeordnet ist, bewegbar und somit stabil und präzise relativ zum Untergestell 14 und somit zum Maschinengestell 10 geführt.

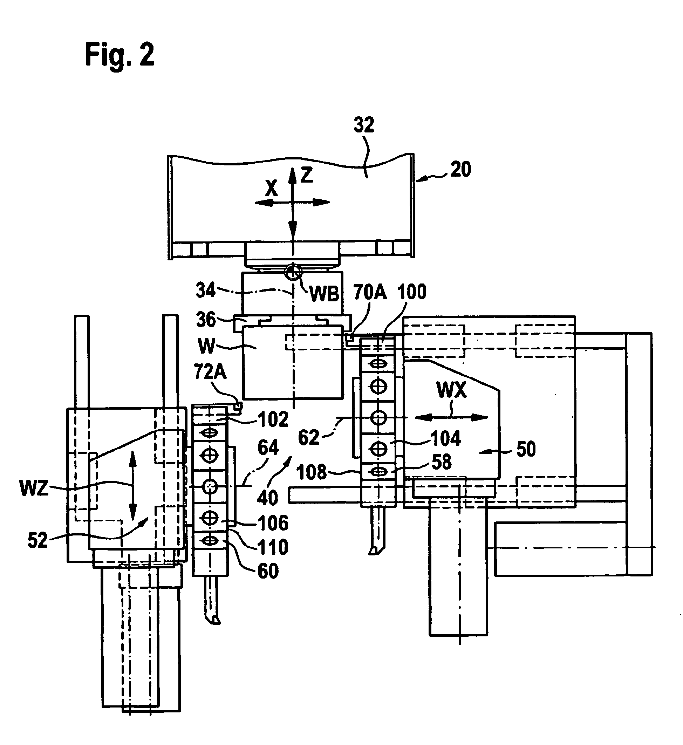

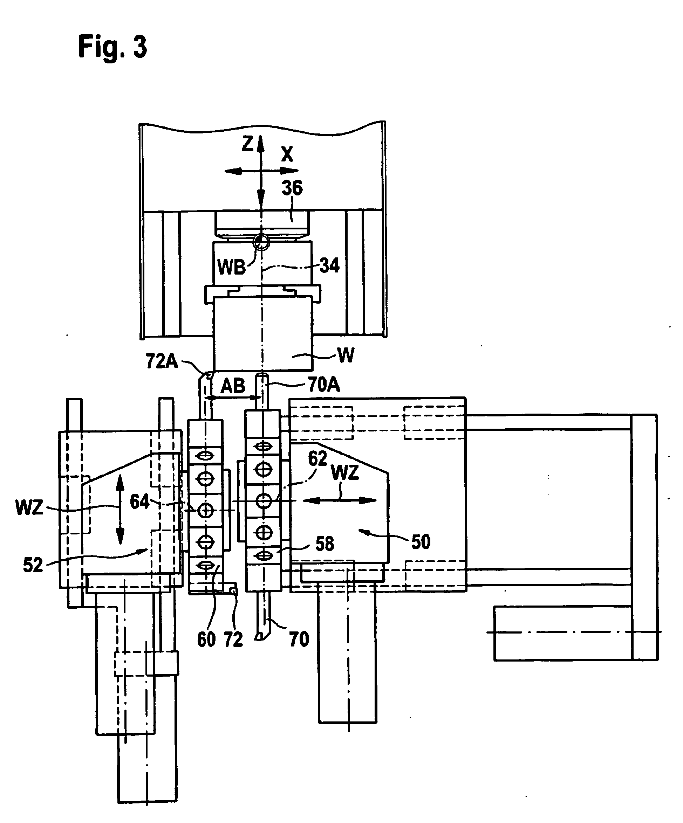

Wie in Fig. 2 und Fig. 3 dargestellt, besteht bei der erfindungsgemäßen Drehmaschine die Möglichkeit, sowohl mit dem in Arbeitsstellung stehenden ersten Werkzeug als auch mit dem in Arbeitsstellung stehenden zweiten Werkzeug gleichzeitig zu bearbeiten, beispielsweise ein und dasselbe Werkstück W zu bearbeiten, welches in der Werkstückaufnahme 36 der Werkstückspindel 32 gehalten ist.

Hierzu ist es allerdings erforderlich, eine als Ganzes mit 90 bezeichnete Steuerung vorzusehen, welche sowohl die Bewegung des Werkstücks W über das Schlittensystem 20 relativ zum Maschinengestell 10 als auch die Bewegung der in Arbeitsstellung stehenden ersten Werkzeuge 70A und zweiten Werkzeuge 72A relativ zum Maschinengestell 10 wie folgt steuert:

Für die Bearbeitung des Werkstücks W mit dem ersten Werkzeug 70A wird die für die Bearbeitung notwendige Relativposition des ersten Werkzeugs 70A relativ zum Werkstück W dadurch erreicht, daß das erste Werkzeug 70 relativ zum Maschinengestell 10 durch Bewegen des ersten Werkzeugträgers 50 in Richtung der ersten Werkzeugbewegungsrichtung WX bewegt wird und zusätzlich erfolgt eine des Werkstücks W relativ zum in Richtung der zweiten Werkzeugbewegungsrichtung WZ unverfahrbaren ersten Werkzeug 70A durch Bewegen des Werkstücks W mittels des Schlittensystems 20 relativ zum Maschinengestell in Richtung der Achsrichtung Z, wobei für die Relativbewegung des Werkstücks W zum ersten Werkzeug 70 die Abstände des ersten Werkzeugs 70 relativ zu einem Werkstückbezugspunkt WB erfolgen.

Zur gleichzeitigen Bearbeitung des Werkstücks W mit dem in Arbeitsstellung stehenden zweiten Werkzeug 72A erfolgt eine Bewegung zwischen dem zweiten Werkzeug 72A und dem Werkstückbezugspunkt WB ebenfalls durch Bewegung des zweiten Werkzeugs 72A in Richtung der zweiten Werkzeugbewegungsrichtung WZ relativ zum Werkstückbezugspunkt WB und außerdem ein Bewegen des Werkstücks W in Richtung der zweiten Werkzeugbewegungsrichtung WX durch Verfahren des Werkstücks W mittels des Schlittensystems 20 in Richtung der Achsrichtung X.

Da sich jedoch das Verfahren des Werkzeugs W mittels des Schlittensystems 20 in Richtung der Achsrichtung X auf die Relativposition zwischen dem Werkstück W und dem ersten Werkzeug 70A auswirken würde, ist das Werkzeug 70A in der ersten Werkzeugbewegungsrichtung WX relativ zum Maschinengestell 10 nicht nur entsprechend dem Abstand des ersten Werkzeugs 70A vom Werkstückbezugspunkt WB zu bewegen, sondern zusätzlich entsprechend der Bewegung des Werkzeugbezugspunkts WB relativ zum Maschinengestell 10, so daß sich die Bewegung des ersten Werkzeugs 70A in Richtung der ersten Werkzeugbewegungsrichtung WX als Summe aus der für die Bearbeitung des Werkstücks W erforderlichen Bewegung des ersten Werkzeugs 70A relativ zum Werkzeugbezugspunkt und der Bewegung des Werkstückbezugspunkts WB relativ zum Maschinengestell 10 in der ersten Werkzeugbewegungsrichtung WX ergibt.

Desgleichen beeinflußt die Bewegung des Werkstücks W in der Achsrichtung Z die Relativbewegung des zweiten Werkzeugs 72A zum Werkstückbezugspunkt WB, so daß auch die Bewegung des zweiten Werkzeugs 72A relativ zum Maschinengestell 10 die Summe aus der aus dem Abstand des zweiten Werkzeugs 72A vom Werkstückbezugspunkt WB erforderlichen Bewegung und der durch den Werkzeugbezugspunkt WB relativ zum Maschinengestell 10 erfolgten Bewegung darstellt.

Damit arbeitet bei der erfindungsgemäßen Drehmaschine die Steuerung 90 dergestalt, daß für die Bewegung jedes der Werkzeuge 70A bzw. 72A die Bewegung des Werkstücks W relativ zum Maschinengestell 10 durch eine von der Steuerung 90 primär gesteuerte Achsbewegung, das heißt eine Primärachse, erfolgt, nämlich beim ersten Werkzeug 70A durch die Bewegung in der zweiten Werkzeugbewegungsrichtung WZ, ausgeführt durch Bewegung des Schlittensystems 20 in der Achsrichtung Z, und beim zweiten Werkzeug 72A durch die Bewegung des Werkstücks W in der ersten Werkzeugbewegungsrichtung WX, ausgeführt durch die Bewegung des Schlittensystems 20 in der Achsrichtung X, während jeweils die Bewegung des entsprechenden Werkzeugs 70A, 72A relativ zum Maschinengestell 10 durch eine sekundäre oder zusammengesetzte Achsbewegung erfolgt, nämlich beim ersten Werkzeug 70A, bedingt durch den Abstand des ersten Werkzeugs 70A von dem Werkstückbezugspunkt WB in Richtung der ersten Werkzeugbewegungsrichtung WX und zusätzlich überlagert von einer Bewegung des ersten Werkzeugs 70A in Richtung der ersten Werkzeugbewegungsrichtung WX aufgrund der Bewegung des Werkstückbezugspunkts WB relativ zum Maschinengestell 10 in dieser Richtung und beim zweiten Werkzeug 72A durch eine Bewegung desselben aufgrund dessen Abstand von dem Werkstückbezugspunkt WB in der zweiten Werkzeugbewegungsrichtung WZ sowie überlagert durch die zusätzliche Bewegung in Richtung der zweiten Werkzeugbewegungsrichtung WZ aufgrund der Bewegung des Werkstückbezugspunkts WB in dieser Richtung.

Aufgrund einer derart aufgebauten Steuerung besteht somit die Möglichkeit, gleichzeitig mit beiden Werkzeugen 70A, 72A dasselbe Werkstück W zu bearbeiten, wobei dies, wie beispielsweise in Fig. 2 dargestellt, eine gleichzeitige Außenbearbeitung, oder auch, wie in Fig. 3 dargestellt, eine Außenbearbeitung kombiniert mit einer Innenbearbeitung oder im Extremfall sogar eine gleichzeitige Innenbearbeitung sein kann.

Um Kollisionen der ersten Werkzeuge 70 und zweiten Werkzeuge 72 zu vermeiden, sind vorzugsweise beim ersten Ausführungsbeispiel die Revolverköpfe 58, 60 als Revolverköpfe von Sternrevolvern ausgebildet, bei denen die Werkzeuge 70, 72 mit ihren Werkzeughaltern 100, 102 jeweils auf den Außenumfangsseiten 104, 106 der Revolverköpfe 58, 60 sitzen.

Es ist aber auch denkbar, die Revolverköpfe 58, 60 so auszuführen, daß die Werkzeughalter auf den einander zugewandten Stirnseiten 108, 110 der Revolverköpfe 58 wie im Fall von Scheibenrevolvern sitzen.

Um bei der erfindungsgemäßen Lösung zumindest alle Möglichkeiten einer Innenbearbeitung kombiniert mit allen Möglichkeiten einer Außenbearbeitung bei einem einzigen Werkstück W durchführen zu können, ist es, wie in Fig. 3 dargestellt erforderlich, daß die Revolverköpfe 58, 60 derart mit den ersten Werkzeugen 70 und den zweiten Werkzeugen 72 bestückt sind, daß diese mindestens mit den in Arbeitsstellung stehenden Werkzeugen 70A und 72A kollisionsfrei soweit aneinander heranfahrbar sind, daß deren minimaler kollisionsfrei erreichbarer Abstand AB einem halben minimalen Durchmesser des Werkstücks W entspricht.

Bei dem dargestellten Ausführungsbeispiel sind die Revolverachsen 62 und 64, um welche die Revolverköpfe 58, 60 drehbar sind, parallel zueinander ausgerichtet und außerdem parallel zur ersten Werkzeugbewegungsrichtung WX und somit vorzugsweise senkrecht zur Spindelachse 34 ausgerichtet.

Es besteht aber auch die Möglichkeit, die Revolverachsen 62, 64 gegenüber der ersten Werkzeugbewegungsrichtung WX geneigt verlaufen zu lassen, und zwar so, daß das jeweils in Arbeitsstellung stehende erste Werkzeug 70A vom in Arbeitsstellung stehenden zweiten Werkzeug 72A den geringsten Abstand aufweist, während all den übrigen der ersten Werkzeuge 70 und der zweiten Werkzeuge 72 größere Abstände voneinander aufweisen. Somit läßt sich die Kollisionsgefahr zwischen den nicht Arbeitsstellung stehenden ersten Werkzeugen 70 und den nicht in Arbeitsstellung stehenden zweiten Werkzeugen 72 reduzieren.

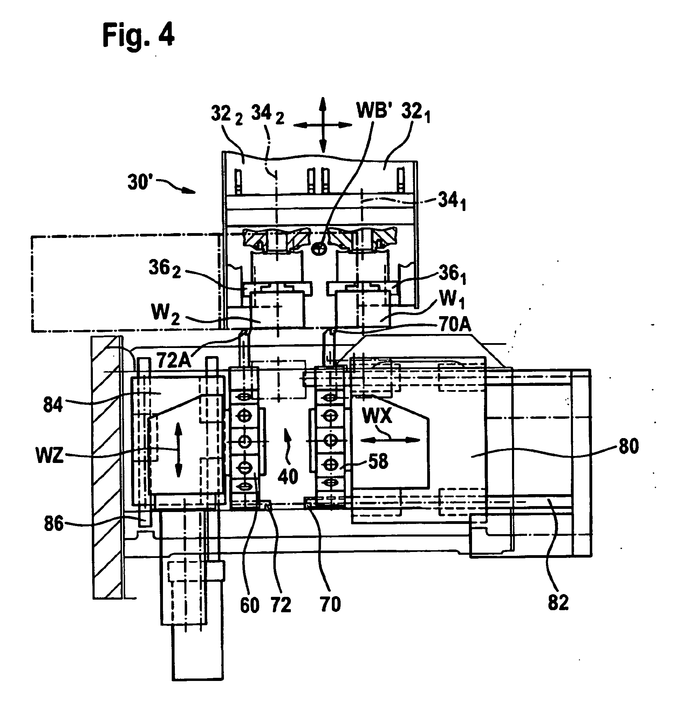

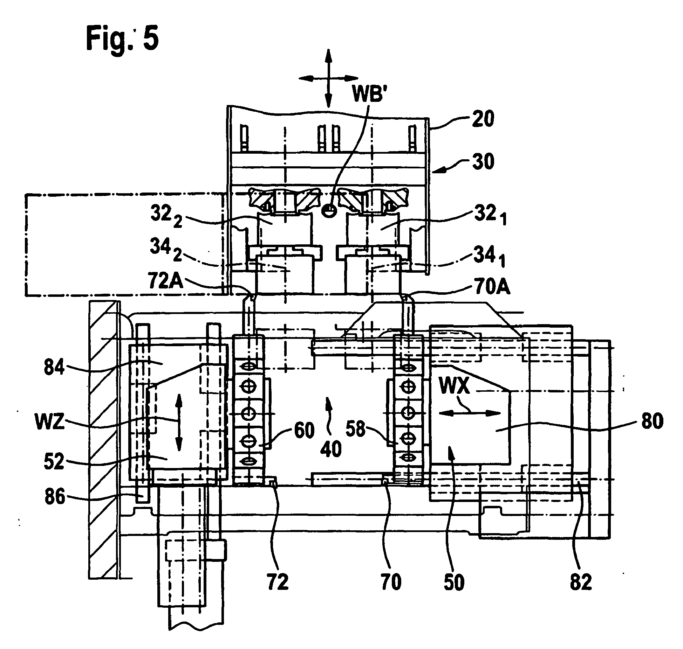

Bei einem zweiten Ausführungsbeispiel, dargestellt in Fig. 4 und 5 ist der Werkzeugträger 30' nicht durch eine einzige Werkstückspindel gebildet, sondern durch zwei nebeneinander und parallel mit ihren Spindelachse 34₁, 34₂ zueinander verlaufende Werkstückspindeln 32₁ und 32₂, in deren Werkstückaufnahmen 36₁und 36₂ jeweils ein Werkstück W₁ bzw. W₂ aufnehmbar ist.

Auch bei diesem zweiten Ausführungsbeispiel ist eine gleichzeitige Bearbeitung mit einem in der Arbeitsstellung stehenden ersten Werkzeug 70A und einem in der Arbeitsstellung stehenden zweiten Werkzeug 72A möglich, und zwar mindestens so, daß jedes der Werkzeuge 70A, 72A eines der Werkstücke W₁ und W₂ bearbeitet, beispielsweise das erste Werkzeug 70A das Werkstück W₁ und das zweite Werkzeug 72A das zweite Werkstück W₂, wie in Fig. 4 und Fig. 5 dargestellt.

Die Steuerung erfolgt dabei in gleicher Weise wie beim ersten Ausführungsbeispiel, wobei als Werkstückbezugspunkt ein gemeinsame Werkstückbezugspunkt WB' für beide Werkstücke W₁ und W₂ definiert wird, relativ zu dem dann die Bewegung des Schlittensystems 20 längs der Achsrichtung X und Z und die

Bewegung der Werkzeugträger 50 und 52 längs der Werkzeugbewegungsachsen WX und WZ in gleicher Weise wie beim ersten Ausführungsbeispiel durch die Steuerung 90 gesteuert wird.

Durch geeignete Konfigurierung der ersten Werkzeuge 70 und zweiten Werkzeuge 72 besteht aber auch noch die Möglichkeit, an jedem der Werkstücke W₁ und W₂ gegebenenfalls gleichzeitig sowohl mit einem ersten Werkzeug 70 als auch einem zweiten Werkzeug 72 eine Bearbeitung durchzuführen.

Bevorzugterweise erfolgt jedoch bei dem zweiten Ausführungsbeispiel der erfindungsgemäßen Drehmaschine eine Bearbeitung der beiden Werkstücke W₁ und W₂ mit den Werkzeugen 70A und 72A simultan, das heißt, daß das Werkzeug 70A und 72A dieselbe Bearbeitung an dem jeweiligen Werkstück W1 bzw. W2 durchführen, da sich dadurch die gegenseitige negative Beeinflussung, die bei unterschiedlichen Bearbeitungen mit den Werkzeugen 70A bzw. 72A auftreten würde, minimieren läßt.

Vorzugsweise sind bei dem zweiten Ausführungsbeispiel die Spindelachsen 34₁und 34₂ in einem Abstand voneinander angeordnet, welcher einem minimal möglichen Abstand bei den für die Bearbeitung bestückten Revolverköpfen 58 bzw. 60 entspricht, so daß sämtliche ersten Werkzeuge 70 mit zweiten Werkzeugen 72 nicht kollidieren können.

Bei einem dritten Ausführungsbeispiel einer erfindungsgemäßen Drehmaschine, welches im Prinzip auf dem zweiten Ausführungsbeispiel basiert, sind diejenigen Teile, die mit dem ersten und insbesondere dem zweiten Ausführungsbeispiel der erfindungsgemäßen Drehmaschine identisch sind, mit denselben Bezugszeichen versehen, so daß hinsichtlich der Erläuterung derselben vollinhaltlich auf die Ausführungen zum ersten Ausführungsbeispiel Bezug genommen werden kann.

Im Gegensatz zum zweiten Ausführungsbeispiel ist beim dritten Ausführungsbeispiel der erfindungsgemäßen Drehmaschine vorgesehen, daß als erste Werkzeuge 70 und zweite Werkzeuge 72 auch radial zu den Spindelachsen 34₁ bzw. 34₂ arbeitende Bohrstangen 70'A und 72'A einsetzbar sind, welche die Möglichkeit eröffnen, die Werkstücke W₁ bzw. W₂ mit radial zu den Spindelachsen 34₁ bzw. 34₂ verlaufenden Bohrungen zu versehen, welche sich mindestens über einen halben Durchmesser der Werkstücke W₁ bzw. W₂ erstrecken können.

Zur Bearbeitung der Werkstücke W₁ und W₂ arbeiten dabei die Bohrstangen 70'A und 72'A auf einander gegenüberliegenden Seiten des Werkstückträgers 30', so daß ausreichend Raum zum Bewegen der Bohrstangen 70'A und 72'A in radialer Richtung zu den Spindelachsen 34₁ bzw. 34₂ zur Verfügung stehen.

Darüber hinaus wird vorzugsweise der Abstand der Spindelachsen 34₁ und 34₂ voneinander so gewählt, daß dieser mindestens der Summe aus der Länge der Bohrstange 70'A und der Länge der Bohrstange 72'A oder bei gleichlangen Bohrstangen 70'A und 72'A der doppelten Länge einer der Bohrstangen 70'A oder 72'A entspricht.

Damit besteht die Möglichkeit, auch bei langen Bohrstangen 70'A und 72'A die beiden Revolverköpfe 58 und 60 soweit aufeinanderzu zu bewegen, daß auch mit einem der ersten Werkzeuge 70 und einem der zweiten Werkzeuge 72 eine stirnseitige Bearbeitung des jeweiligen Werkstücks W₁ bzw. W₂ im Bereich der jeweiligen Spindelachse 34₁bzw. 34₂ möglich ist.

Bei dem dritten Ausführungsbeispiel beträgt außerdem der maximale Verfahrweg des Revolverkopfes 58 in der X-Richtung mindestens ungefähr der Summe der maximalen Radien der Werkstücke W₁ und W₂ zuzüglich der Summe der längsten radialen Bohrwerkzeuge 70' und 72', die an den Werkstücken W₁und W₂ zum Einsatz kommen sollen.

## Patentansprüche

1. Drehmaschine umfassend ein sich über einer Grundfläche (12) erhebendes Maschinengestell (10), einen relativ zum Maschinengestell (10) durch ein Schlittensystem (20) mindestens in einer ersten Bewegungsebene (X/Z) in Richtung zweier quer zueinander verlaufender Werkstückbewegungsachsen (X, Z) bewegbaren Werkstückträger (30) mit mindestens einer eine Werkstückaufnahme (36) aufweisenden Werkstückspindel (32), deren Spindelachse (34) parallel zur ersten Bewegungsebene (X/Z) verläuft sowie einen ersten und einen zweiten am Maschinengestell (10) angeordneten Werkzeugträger (50, 52) zur Aufnahme von jeweils mindestens einem ersten bzw. einem zweiten Werkzeug (70, 72) von denen mindestens eines relativ zum Maschinengestell (10) bewegbar ist,
**dadurch gekennzeichnet, daß** der erste Werkzeugträger (50) relativ zum Maschinengestell (10) nur in einer, in einer zur ersten Bewegungsebene (X/Z) parallelen zweiten Bewegungsebene (WX/WZ) liegenden ersten Werkzeugbewegungsrichtung (WX) bewegbar ist, daß der zweite Werkzeugträger (52) nur in einer quer zur ersten Werkzeugbewegungsrichtung (WX) verlaufenden und in der zweiten Bewegungsebene (WX/WZ) liegenden zweiten Werkzeugbewegungsrichtung (WZ) bewegbar ist und daß eine Steuerung (90) vorgesehen ist, welche zur Bearbeitung mit dem mindestens einen ersten Werkzeug (70) des ersten Werkzeugträgers (50) eine Relativbewegung zwischen dem ersten Werkzeug (70) und dem Werkstückträger (30) durch Bewegen des ersten Werkzeugs (70) in der ersten Werkzeugbewegungsrichtung (WX) und Bewegen des Werkstückträgers (30) in der
zweiten Werkzeugbewegungsrichtung (WZ) ausführt und welche zur Bearbeitung mit dem mindestens einen zweiten Werkzeug (72) des zweiten Werkzeugträgers (52) eine Relativbewegung zwischen dem zweiten Werkzeug (72) und dem Werkstückträger (30) durch Bewegen des zweiten Werkzeugs (72) in der zweiten Werkzeugbewegungsrichtung (WZ) und Bewegen des Werkstückträgers (30) in der ersten Werkzeugbewegungsrichtung (WX) ausführt.

2. Drehmaschine nach Anspruch 1, **dadurch gekennzeichnet, daß** die Steuerung (90) zur gleichzeitigen und unabhängig voneinander erfolgenden Bearbeitung mit dem mindestens einen ersten Werkzeug (70) und dem mindestens einen zweiten Werkzeug (72) die Bewegung des mindestens einen ersten Werkzeugs (70) in der ersten Werkzeugbewegungsrichtung (WX) relativ zum Maschinengestell (10) entsprechend dem bearbeitungsnotwendigen Abstand von einem Werkstückbezugspunkt (WB) und zusätzlich entsprechend der Bewegung des Werkstückbezugspunkts (WB) in der ersten Werkzeugbewegungsrichtung (WX) relativ zum Maschinengestell (10) für die Bearbeitung mit dem zweiten Werkzeug (72) ausführt und daß die Steuerung (90) die Bewegung des mindestens einen zweiten Werkzeugs (72) in der zweiten Werkzeugbewegungsrichtung (WZ) relativ zum Maschinengestell (10) entsprechend dem bearbeitungsnotwendigen Abstand von dem Werkstückbezugspunkt (WB) und zusätzlich entsprechend der Bewegung des Werkstückbezugspunkts (WB) in Richtung der zweiten Werkzeugbewegungsrichtung (WZ) relativ zum Maschinengestell (10) für die Bearbeitung mit dem ersten Werkzeug (70) ausführt.

3. Drehmaschine nach einem der voranstehenden Ansprüche, **dadurch gekennzeichnet, daß** die Steuerung (90) so arbeitet, daß für diese die Bewegung des Werkstückbezugspunkts (WB) in der zweiten Werkzeugbewegungsrichtung (WZ) zur Bearbeitung mit dem ersten Werkzeug (70) eine Primärachse darstellt, nach welcher sich die Bewegung des zweiten Werkzeugs (72) in der zweiten Werkzeugbewegungsrichtung (WZ) richtet.

4. Drehmaschine nach einem der voranstehenden Ansprüche, **dadurch gekennzeichnet, daß** die Steuerung (90) so arbeitet, daß für diese die Bewegung des Werkstückbezugspunkts (WB) in der ersten Werkzeugbewegungsrichtung (WX) zur Bearbeitung mit dem zweiten Werkzeug (72) eine Primärachse darstellt, nach welcher sich die Bewegung des ersten Werkzeugs (70) in der ersten Werkzeugbewegungsrichtung (WX) richtet.

5. Drehmaschine nach einem der voranstehenden Ansprüche, **dadurch gekennzeichnet, daß** die erste Werkzeugbewegungsachse (WX) parallel zur ersten Werkstückbewegungsachse (X) verläuft.

6. Drehmaschine nach einem der voranstehenden Ansprüche, **dadurch gekennzeichnet, daß** die zweite Werkzeugbewegungsachse (WZ) parallel zur zweiten Werkstückbewegungsachse (Z) verläuft.

7. Drehmaschine nach einem der voranstehenden Ansprüche, **dadurch gekennzeichnet, daß** der Werkzeugträger (30) zwei Werkstückspindeln (32₁, 32₂) umfaßt.

8. Drehmaschine nach Anspruch 7, **dadurch gekennzeichnet, daß** die Werkstückspindeln (32₁, 32₂) mit ihren Spindelachsen (34₁, 34₂) parallel zueinander ausgerichtet sind.

9. Drehmaschine nach Anspruch 7 oder 8, **dadurch gekennzeichnet, daß** das in einer ersten Werkstückspindel (32₁) angeordnete erste Werkstück (W₁) durch das mindestens eine erste Werkzeug (70) bearbeitbar ist.

10. Drehmaschine nach einem der Ansprüche 7 bis 9, **dadurch gekennzeichnet, daß** das in einer zweiten Werkstückspindel (32₂) angeordnete zweite Werkstück (W₂) durch das mindestens eine zweite Werkzeug (72) bearbeitbar ist.

11. Drehmaschine nach einem der voranstehenden Ansprüche, **dadurch gekennzeichnet, daß** die Werkzeugträger (50, 52) als Werkzeugrevolver ausgebildet sind.

12. Drehmaschine nach Anspruch 11, **dadurch gekennzeichnet, daß** die Werkzeugrevolver (50, 52) als Sternrevolver ausgebildet sind.

13. Drehmaschine nach einem der voranstehenden Ansprüche, **dadurch gekennzeichnet, daß** der Verfahrweg des jeweiligen Werkzeugträgers (52) in der parallel zur Spindelachse (34) verlaufenden Werkzeugbewegungsrichtung (WZ) größer ist als eine Ausdehnung des Werkstücks in dieser Richtung.

14. Drehmaschine nach einem der voranstehenden Ansprüche, **dadurch gekennzeichnet, daß** der Verfahrweg des jeweiligen Werkzeugträgers (50) in der quer zur Spindelachse (36) verlaufenden Werkzeugbewegungsrichtung (WX) größer ist als ein halber Durchmesser des Werkstücks (W).

15. Drehmaschine nach einem der voranstehenden Ansprüche, **dadurch gekennzeichnet, daß** sowohl der erste Werkzeugträger (50) als auch der zweite Werkzeugträger (52) in der ersten Werkzeugbewegungsrichtung (WX) bzw. der zweiten Werkzeugbewegungsrichtung (WZ) mindestens über Abmessungen des Werkstücks (W) in diesen Richtungen entsprechende Verfahrwege bewegbar sind.

16. Drehmaschine nach einem der voranstehenden Ansprüche, **dadurch gekennzeichnet, daß** die ersten und zweiten Werkzeugträger (50, 52) so ausgebildet und mit Werkzeugen (70, 72) bestückbar sind, daß sie kollisionsfrei mindestens soweit aufeinanderzu bewegbar sind, daß das in Arbeitsstellung stehende erste (70A) und das in Arbeitsstellung stehende zweite Werkzeug (72A) einen einem halben Werkstückdurchmesser entsprechenden Abstand oder weniger voneinander aufweisen.

17. Drehmaschine nach einem der Ansprüche 7 bis 16, **dadurch gekennzeichnet, daß** ein Abstand der Spindelachsen (34₁, 34₂) der Werkstückspindeln (32₁, 32₂) ungefähr einem Abstand von ersten und zweiten in Arbeitsstellung stehenden Innenbearbeitungswerkzeugen (70, 72) bei kollisionsfrei nächstliegend angeordneten Werkzeugträgern (50, 52) entspricht.

18. Drehmaschine nach einem der Ansprüche 7 bis 17, **dadurch gekennzeichnet, daß** ein maximaler Verfahrweg des quer zu den Spindelachsen (34₁, 34₂) verfahrbaren Werkzeugträgers (50) mindestens ungefähr der Summe aus den maximalen Radien der Werkstücke (W₁, W₂) zuzüglich der Länge der Längsten, in Arbeitsstellung stehenden radial arbeitenden angetriebenen Werkzeuge (70'A, 72'A) entspricht.

19. Drehmaschine nach einem der voranstehenden Ansprüche, **dadurch gekennzeichnet, daß** die Werkstückaufnahme (36) hängend auf einer der Grundfläche (12) zugewandten Seite der Werkstückspindel (32) angeordnet ist.

## Claims

1. Lathe comprising a machine frame (10) rising above a base surface (12), a workpiece carrier (30) movable relative to the machine frame (10) by means of a slide system (20) at least in a first plane of movement (X/Z) in the direction of two axes of workpiece movement (X, Z) extending transversely to one another, said workpiece carrier having at least one workpiece spindle (32) with a workpiece receiving means (36), the spindle axis (34) of said workpiece spindle extending parallel to the first plane of movement (X/Z), as well as a first and a second tool carrier (50, 52) arranged on the machine frame (10) for accommodating at least one first and one second tool (70, 72), respectively, at least one of said tools being movable relative to the machine frame (10),
**characterized in that** the first tool carrier (50) is movable relative to the machine frame (10) only in a first direction of tool movement (WX) located in a second plane of movement (WX/WZ) parallel to the first plane of movement (X/Z), that the second tool carrier (52) is movable only in a second direction of tool movement (WZ) extending transversely to the first direction of tool movement (WX) and being located in the second plane of movement (WX/WZ) and that a control (90) is provided, said control, for the purpose of machining with the at least one first tool (70) of the first tool carrier (50), carrying out a relative movement between the first tool (70) and the workpiece carrier (30) by way of movement of the first tool (70) in the first direction of tool movement (WX) and movement of the workpiece carrier (30) in the second direction of tool movement (WZ) and, for the purpose of machining with the at least one second tool (72) of the second tool carrier (52), carrying out a relative movement between the second tool (72) and the workpiece carrier (30) by way of movement of the second tool (72) in the second direction of tool movement (WZ) and movement of the workpiece carrier (30) in the first direction of tool movement (WX).

2. Lathe as defined in claim 1, **characterized in that**, for the purpose of simultaneous machining with the at least one first tool (70) and the at least one second tool (72) independently of one another, the control (90) carries out the movement of the at least one first tool (70) in the first direction of tool movement (WX) relative to the machine frame (10) in accordance with the distance from a workpiece reference point (WB) necessary for the machining and, in addition, in accordance with the movement of the workpiece reference point (WB) in the first direction of tool movement (WX) relative to the machine frame (10) for the machining with the second tool (72) and that the control (90) carries out the movement of the at least one second tool (72) in the second direction of tool movement (WZ) relative to the machine frame (10) in accordance with the distance from the workpiece reference point (WB) necessary for the machining and, in addition, in accordance with the movement of the workpiece reference point (WB) in the direction of the second direction of tool movement (WZ) relative to the machine frame (10) for the machining with the first tool (70).

3. Lathe as defined in any one of the preceding claims, **characterized in that** the control (90) operates such that the movement of the workpiece reference point (WB) in the second direction of tool movement (WZ) for the machining with the first tool (70) represents a primary axis for said control, the movement of the second tool (72) in the second direction of tool movement (WZ) depending on said axis.

4. Lathe as defined in any one of the preceding claims, **characterized in that** the control (90) operates such that the movement of the workpiece reference point (WB) in the first direction of tool movement (WX) for the machining with the second tool (72) represents a primary axis for said control, the movement of the first tool (70) in the first direction of tool movement (WX) depending on said axis.

5. Lathe as defined in any one of the preceding claims, **characterized in that** the first axis of tool movement (WX) extends parallel to the first axis of workpiece movement (X).

6. Lathe as defined in any one of the preceding claims, **characterized in that** the second axis of tool movement (WZ) extends parallel to the second axis of workpiece movement (Z).

7. Lathe as defined in any one of the preceding claims, **characterized in that** the tool carrier (30) comprises two workpiece spindles (32₁, 32₂).

8. Lathe as defined in claim 7, **characterized in that** the workpiece spindles (32₁, 32₂) are aligned parallel to one another with their spindle axes (34₁, 34₂).

9. Lathe as defined in claim 7 or 8, **characterized in that** the first workpiece (W₁) arranged in a first workpiece spindle (32₁) is machinable by the at least one first tool (70).

10. Lathe as defined in any one of claims 7 to 9, **characterized in that** the second workpiece (W₂) arranged in a second workpiece spindle (32₂) is machinable by the at least one second tool (72).

11. Lathe as defined in any one of the preceding claims, **characterized in that** the tool carriers (50, 52) are designed as tool turrets.

12. Lathe as defined in claim 11, **characterized in that** the tool turrets (50, 52) are designed as star turrets.

13. Lathe as defined in any one of the preceding claims, **characterized in that** the distance of travel of the respective tool carrier (52) in the direction of tool movement (WZ) extending parallel to the spindle axis (34) is greater than an extension of the workpiece in this direction.

14. Lathe as defined in any one of the preceding claims, **characterized in that** the distance of travel of the respective tool carrier (50) in the direction of tool movement (WX) extending transversely to the spindle axis (36) is greater than half a diameter of the workpiece (W).

15. Lathe as defined in any one of the preceding claims, **characterized in that** both the first tool carrier (50) and the second tool carrier (52) are movable in the first direction of tool movement (WX) and the second direction of tool movement (WZ), respectively, at least over distances of travel corresponding to dimensions of the workpiece (W) in these directions.

16. Lathe as defined in any one of the preceding claims, **characterized in that** the first and second tool carriers (50, 52) are designed and adapted to be equipped with tools (70, 72) such that they are movable towards one another without colliding at least to such an extent that the first tool (70A) located in operative position and the second tool (72A) located in operative position are at a distance from one another corresponding to half a diameter of the workpiece or less.

17. Lathe as defined in any one of claims 7 to 16, **characterized in that** a distance between the spindle axes (34₁, 34₂) of the workpiece spindles (32₁, 32₂) corresponds approximately to a distance between first and second tools (70, 72) located in operative position for machining the interior of workpieces when the tool carriers (50, 52) are arranged so as to be located nearest to one another without colliding.

18. Lathe as defined in any one of claims 7 to 17, **characterized in that** a maximum distance of travel of the tool carrier (50) movable transversely to the spindle axes (34₁, 34₂) corresponds at least approximately to the sum of the maximum radii of the workpieces (W₁, W₂) plus the length of the longest radially operating, driven tools (70'A, 72'A) located in operative position.

19. Lathe as defined in any one of the preceding claims, **characterized in that** the workpiece receiving means (36) is arranged so as to hang on a side of the workpiece spindle (32) facing the base surface (12).

## Revendications

1. Tour comprenant un bâti de machine (10) s'élevant au-dessus d'une surface de base (12), un porte-pièce (30) mobile par rapport au bâti de machine (10), grâce à un système de chariot (20), au moins dans un premier plan de mouvement (X/Z) en direction de deux axes de mouvement (X, Z) de la pièce à usiner s'étendant de façon transversale l'un par rapport à l'autre, porte-pièce comprenant au moins une broche porte-pièce (32) présentant au moins une fixation (36) de la pièce à usiner, broche porte-pièce dont l'axe (34) de la broche s'étend parallèlement au premier plan de mouvement (X/Z), ainsi qu'un premier et un deuxième porte-outils (50, 52) disposés sur le bâti (7,0) de la machine, porte-outils servant à la fixation, à chaque fois, d'au moins un premier ou d'un deuxième outil (70, 72), outils dont au moins un est mobile par rapport au bâti (10) de la machine,
**caractérisé**
**en ce que** le premier porte-outil (50) est mobile par rapport au bâti (10) de la machine seulement dans une première direction de mouvement de l'outil (WX) se trouvant dans un deuxième plan de mouvement (WX/WZ) parallèle au premier plan de mouvement (X/Z),
**en ce que** le deuxième porte-outil (52) est mobile seulement dans une deuxième direction (WZ) de mouvement de l'outil s'étendant de façon transversale par rapport à la première direction (WZ) de mouvement de l'outil et se trouvant dans le deuxième plan de mouvement (WX/WZ), et
**en ce qu'**il est prévu une commande (90) qui, pour l'usinage avec le premier outil (70), au moins au nombre de un, du premier porte-outil (50), exécute un mouvement relatif entre le premier outil (70) et le porte-pièce (30), déclenché par un mouvement du premier outil (70) dans la première direction de mouvement de l'outil (WX) et par un mouvement du porte-pièce (30) dans la deuxième direction de mouvement de l'outil (WZ) et qui, pour l'usinage avec le deuxième outil (72), au moins au nombre de un, du deuxième porte-outil (52) exécute un mouvement relatif entre le deuxième outil (72) et le porte-pièce (30), déclenché par un mouvement du deuxième outil (72) dans la deuxième direction de mouvement de l'outil (WZ) et par un mouvement du porte-pièce (30) dans la première direction de mouvement de l'outil (WX).

2. Tour selon la revendication 1, **caractérisé en ce que** la commande (90), pour les étapes d'usinage avec le premier outil (70) au moins au nombre de un et avec le deuxième outil (72) au moins au nombre de un, lesdites étapes d'usinage se produisant en même temps et indépendamment l'une de l'autre, exécute le mouvement du premier outil (70) au moins au nombre de un se produisant dans la première direction de mouvement de l'outil (WX) par rapport au bâti (10) de la machine, correspondant à la distance, nécessaire pour l'usinage, par rapport à un point de référence de la pièce à usiner (WB) et, en outre, correspondant au mouvement du point de référence de la pièce à usiner (WB) se produisant dans la première direction de mouvement de l'outil (WX) par rapport au bâti (10) de la machine, pour l'usinage avec le deuxième outil (72), et **en ce que** la commande (90) exécute le mouvement du deuxième outil (72) au moins au nombre de un se produisant dans la deuxième direction de mouvement de l'outil (WZ) par rapport au bâti (10) de la machine, correspondant à la distance, nécessaire pour l'usinage, par rapport au point de référence de la pièce à usiner (WB) et, en outre, correspondant au mouvement du point de référence de la pièce à usiner (WB) se produisant dans la deuxième direction de mouvement de l'outil (WZ) par rapport au bâti (10) de la machine, pour l'usinage avec le premier outil (70).

3. Tour selon l'une ou l'autre des revendications précédentes, **caractérisé en ce que** la commande (90) travaille de manière telle, que le mouvement du point de référence de la pièce à usiner (WB) se produisant dans la deuxième direction de mouvement de l'outil (WZ), pour l'usinage avec le premier outil (70), représente, pour cette commande, un axe primaire sur lequel se règle le mouvement du deuxième outil (72) se produisant dans la deuxième direction de mouvement de l'outil (WZ).

4. Tour selon l'une quelconque des revendications précédentes, **caractérisé en ce que** la commande (90) travaille de manière telle, que le mouvement du point de référence de la pièce à usiner (WB) se produisant dans la première direction de mouvement de l'outil (WX), pour l'usinage avec le deuxième outil (72), représente, pour cette commande, un axe primaire sur lequel se règle le mouvement du premier outil (70) se produisant dans la première direction de mouvement de l'outil (WX).

5. Tour selon l'une quelconque des revendications précédentes, **caractérisé en ce que** le premier axe de mouvement de l'outil (WX) s'étend parallèlement au premier axe de mouvement de la pièce à usiner (X) .

6. Tour selon l'une quelconque des revendications précédentes, **caractérisé en ce que** le deuxième axe de mouvement de l'outil (WZ) s'étend parallèlement au deuxième axe de mouvement de la pièce à usiner (Z).

7. Tour selon l'une quelconque des revendications précédentes, **caractérisé en ce que** le porte-outil (30') comprend deux broches porte-pièces (32₁, 32₂).

8. Tour selon la revendication 7, **caractérisé en ce que** les broches porte-pièces (32₁, 32₂) sont, par leurs axes de broches (34₁, 34₂), orientées parallèlement entre elles.

9. Tour selon la revendication 7 ou 8, **caractérisé en ce que** la première pièce à usiner (W₁) disposée dans une première broche porte-pièce (32₁) peut être usinée par le premier outil (70) au moins au nombre de un.

10. Tour selon l'une quelconque des revendications 7 à 9, **caractérisé en ce que** la deuxième pièce à usiner (W₂) disposée dans une deuxième broche porte-pièce (32₂) peut être usinée par le deuxième outil (72) au moins au nombre de un.

11. Tour selon l'une quelconque des revendications précédentes, **caractérisé en ce que** les porte-outils (50, 52) sont conçus comme des tourelles revolvers d'outils.

12. Tour selon la revendication 11, **caractérisé en ce que** les tourelles revolvers d'outils (50, 52) sont conçues comme des tourelles revolvers en étoile.

13. Tour selon l'une quelconque des revendications précédentes, **caractérisé en ce que** la course d'usinage du porte-outil respectif (52), dans la direction de mouvement de l'outil (WZ) s'étendant parallèlement à l'axe (34) de la broche, est plus grande qu'une étendue de la pièce à usiner, dans cette direction.

14. Tour selon l'une quelconque des revendications précédentes, **caractérisé en ce que** la course d'usinage du porte-outil respectif (50), dans la direction de mouvement de l'outil (WX) s'étendant de façon transversale par rapport à l'axe (36) de la broche, est plus grande qu'un demi-diamètre de la pièce à usiner (W).

15. Tour selon l'une quelconque des revendications précédentes, **caractérisé en ce qu'**aussi bien le premier porte-outil (50) que le deuxième porte-outil (52) sont mobiles dans la première direction de mouvement de l'outil (WX) ou dans la deuxième direction de mouvement de l'outil (WZ), au moins sur des dimensions de la pièce à usiner (W), dans des courses d'usinage correspondant à ces directions.

16. Tour selon l'une quelconque des revendications précédentes, **caractérisé en ce que** les premier et deuxième porte-outils (50, 52) sont conçus et peuvent être dotés d'outils (70, 72), de manière telle que lesdits porte-outils soient mobiles, sans entrer en collision, au moins dans la mesure où ils se déplacent l'un vers l'autre, **en ce que** le premier outil (70A) se trouvant en position de travail et le deuxième outil (72A) se trouvant en position de travail présentent une distance, l'un par rapport à l'autre, qui correspond ou est inférieure à un demi-diamètre de la pièce à usiner.

17. Tour selon l'une quelconque des revendications 7 à 16, **caractérisé en ce qu'**une distance des axes (34₁, 34₂) des broches porte-pièces (32_{1'} 32₂) correspond à peu près à une distance par rapport à un premier et à un deuxième outils (70, 72) d'usinage intérieur se trouvant en position de travail, les porte-outils (50, 52) étant disposés à proximité immédiate l'un de l'autre, sans entrer en collision.

18. Tour selon l'une quelconque des revendications 7 à 17, **caractérisé en ce qu'**une course d'usinage maximum du porte-outil (50) mobile de façon transversale par rapport aux axes de broches (34₁, 34₂) correspond au moins à peu près à la somme des rayons maximums des pièces à usiner (W₁, W₂), plus la longueur des outils les plus longs (70'A, 72'A) se trouvant en position de travail, en étant entraînés et fonctionnant dans le sens radial.

19. Tour selon l'une quelconque des revendications précédentes, **caractérisé en ce que** la fixation (36) de la pièce à usiner est disposée en suspension sur un côté de la broche porte-pièce (32), tourné vers la surface de base (12).
